# EUROPÄISCHE PATENTSCHRIFT

(11) **EP 1 113 926 B1**
(45) Veröffentlichungstag und Bekanntmachung des Hinweises auf die Patenterteilung: **18.06.2003**
(21) Anmeldenummer: 99941571.4
(22) Anmeldetag: 10.08.1999
(51) Int. Cl.: B32B 17/10, C03C 27/12, C09J 4/00, C09J 4/06

(54) **VERFAHREN ZUR HERSTELLUNG VON VERBUNDGLAS**
METHOD FOR THE PRODUCTION OF COMPOSITE GLASS
PROCEDE DE PRODUCTION DE VERRE FEUILLETE

(30) Priorität: 13.08.1998 DE 19836694
(43) Veröffentlichungstag der Anmeldung: 11.07.2001
(73) Patentinhaber: Chemetall GmbH, 60487 Frankfurt am Main (DE)
(72) Erfinder: HERASIMTSCHUK, Jörg, D-61440 Oberursel (DE); SCHWAMB, Michael, D-60325 Frankfurt am Main (DE); UNGER Gerfried, D-60318 Frankfurt am Main (DE); NAGEL, Dieter, D-61137 Schöneck (DE); RÜBSAMEN, Jürgen, D-65375 Oestrich (DE); WEITZEL, Klaus, D-60439 Frankfurt am Main (DE); WOLTHAUS, Jens, D-65189 Wiesbaden (DE); KNÖCHELMANN, Eckard, D-04860 Süptitz (DE); HÖLZEL, Ronny, D-04886 Beilrode (DE)
(74) Vertreter: Uppena, Franz, Dr.
(86) Internationale Anmeldenummer: EP9905833
(87) Internationale Veröffentlichungsnummer: WO00009328

(56) Entgegenhaltungen:
- EP-A- 0 108 631
- EP-A- 0 108 632
- EP-A- 0 422 557
- EP-A- 0 670 341
- DE-A- 2 737 740
- DE-A- 19 535 935
- US-A- 3 654 039

## Beschreibung

Die vorliegende Erfindung betrifft ein neues Verfahren zur Herstellung von Verbundglas.

Verbundglas besteht aus mindestens zwei Glastafeln und einer Zwischenschicht, die die Glastafeln miteinander verbindet. Die Glastafeln können in beliebiger Kombination ausgewählt werden aus anorganischen Gläsern, wie Floatglas, Weißglas, Einscheibensicherheitsglas, teilvorgespanntes Glas, gefärbtes Glas, beschichtetes Glas, verspiegeltes Glas, Dünnschichtsolarmodule, und aus organischen Gläsern, wie Polycarbonat- (PC) oder Polymethylmethacrylatglas (PMMA).

Verbundglas findet Anwendung z.B. als Verbundglas mit Sicherheits- und/oder Schallschutzeigenschaften, beim Schutz von Oberflächen durch Verkleben mit einer Glasscheibe oder bei der Herstellung von Solarmodulen.

Zur Herstellung von Verbundglas mit einer aushärtbaren Zwischenschicht werden derzeit folgende Verfahren angewendet:

Ein weit verbreitetes Verfahren arbeitet in der Weise, daß ein schräg aufgestelltes, aus zwei, in einem gewissen Abstand befindlichen, gereinigten Glastafeln bestehendes Scheibenpaket mit einem niedrigviskosen Gießharz gefüllt wird. Dabei ist der zwischen den zwei Glastafeln befindliche Hohlraum nach außen hin mit z.B. einem doppelseitigen Klebeband, welches sich zwischen den zwei Glastafeln befindet, abgedichtet. Diese Randabdichtung kann auch mit einer Butylschnur, die einen harten Kern aus einem thermoplastischen Polymer, wie z.B. Polypropylen, enthält, bestehen.

Nach dem Befüllen, Abkippen der befüllten Doppelscheibe in die Horizontale, Entlüften und Verschließen der Einfüllöffnung mit einem thermoplastischen Material, z.B. wieder mit einem Schmelzklebstoff oder mit einer Butylschnur, erfolgt die Aushärtung der zwischen den Glastafeln befindlichen Gießharzschicht. Die Aushärtung kann bei einem Einkomponentensystem durch UV-Licht oder thermisch und bei einem Mehrkomponentensystem durch Lagerung bei Raumtemperatur oder durch Wärmezufuhr erfolgen. Dieses diskontinuierliche Herstellungsverfahren unterliegt Einschränkungen bzw. Nachteilen. So erfolgt das Aufkleben des Klebebandes oder der Butylschnur manuell, was sehr zeitaufwendig ist. Gießharzschichten mit einer Dicke < 0,9 mm können nicht hergestellt werden; aufgrund der Notwendigkeit des schnellen Befüllens und Entlüftens des Glastafelverbundes ist das Verfahren auf den Einsatz niedrigviskoser Harze beschränkt. Durch die niedrige Harzviskosität besteht aber die Gefahr, daß das flüssige Gießharz vor der Aushärtung aus der befüllten Doppelscheibe ausläuft. Zum Entlüften ist ein Abkippen von der Vertikalen in die Horizontale notwendig, was einer manuellen Steuerung bedarf; bei größeren Scheibenabmessungen ergeben sich stärkere Schichtdickendifferenzen, und das Gießharz muß stationär aushärten. Die Schichtdickendifferenzen der ausgehärteten Gießharzschicht können bei diesem Verfahren bedingt durch die niedrige Viskosität des Gießharzes bei einer Sollschichtdicke von 1,0 mm im Bereich von 0,2 bis 0,8 mm liegen.

Nach einem anderen, in der DE 2737 740 A beschriebenen automatischen Verfahren erfolgt nach Erwärmen der ersten von zwei gereinigten Glastafeln mittels einer Walze ein Klebstoffauftrag in einer Schichtdicke von ca. 0,3 mm. Auf diesen noch nicht ausgehärteten Klebstoff wird dann mittels einer Walze eine Polymerfolie aufgelegt und mit IR-Strahlung wieder erwärmt. Dieser Glas-Klebstoff-Folien-Verbund wird mit Gummirollen so verpreßt, daß Falten ausgebügelt und die Luft zwischen Glas und Folie ausgetrieben wird. Danach erfolgt mittels Walzen ein weiterer Klebstoffauftrag auf die Polymerfolie. Anschließend wird eine zweite Glastafel deckungsgleich abgelegt und mittels eines Walzenpaares so verpreßt, daß der Druck der Walzen in der zweiten Klebstoffschicht eine Keilform erzeugt, wodurch sich die obere Glasplatte geringfügig abhebt und so eine Entlüftung ermöglicht. Der Klebstoff im entstandenen Verbund wird anschließend durch Wärmeeinwirkung ausgehärtet. Auch dieses Verfahren weist Nachteile auf: So müssen die Verfahrensschritte Erwärmung, Klebstoffauftrag und Verpressen mehrfach angewandt werden; das Verbundsystem besteht aus fünf statt aus drei Schichten; überschüssige Folie an den Scheibenaußenseiten muß entfernt werden, und die angegebene Transportgeschwindigkeit von 0,457 m/min ist sehr langsam.

In der WO 97/22473 wird ein Verfahren zur Herstellung eines Laminates bestehend aus mindestens zwei (Glas-)tafeln beschrieben, bei dem die Zwischenschicht aus einem polymerisierbaren Harz besteht, diese Schicht vor dem Auflegen der zweiten Glastafel vorpolymerisiert wird und nach dem Auflegen der zweiten Glastafel und Verpressen des Verbundes endgültig polymerisiert wird. Von Nachteil bei diesem Verfahren ist der umständliche Schritt der Vorpolymerisation. Weiterhin von Nachteil ist, daß beim Harzauftrag eine Randabdichtung benötigt wird.

Der Erfindung liegt daher die Aufgabe zugrunde, die Nachteile des Standes der Technik zu überwinden und zur Herstellung von Verbundglas ein Verfahren zu schaffen, das mit wenigen Verfahrensschritten arbeitet und ohne Randabdichtung arbeiten kann.

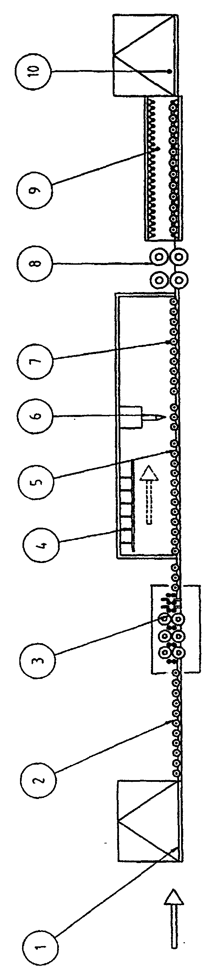

Die Aufgabe wird durch das in Anspruch 1 angegebene Verfahren gelöst. Die Ansprüche 2 bis 11 bilden das angegebene Verfahren weiter. In der Zeichnung ist beispielhaft der Verfahrensablauf einer automatisierten Verfahrensvariante angegeben.

Nach dem erfindungsgemäßen Verfahren sind zur Herstellung von Verbundglas nur noch fünf Verfahrensschritte notwendig:
1. Reinigen und Trocknen der Glastafeln,
2. Auftrag eines pastösen Klebstoffes auf die Innenseite der ersten, waagerecht liegenden Glastafel,
3. deckungsgleiches Ablegen der zweiten Glastafel auf die Klebstoffschicht,
4. Verpressen der Sandwichanordnung und
5. Aushärten der Klebstoffschicht.

Das Reinigen mit handelsüblichen Glasreinigern und das Trocknen der Glastafeln geschieht in an sich bekannter Weise. Vorzugsweise kann dies automatisch in einer Waschmaschine geschehen. Nach dem Waschen müssen die Glastafeln absolut trocken, fettfrei und frei von Reinigerrückständen sein. Von Vorteil ist eine Kontrolle auf Sauberkeit. Dies kann mit Hilfe von Leuchtstoffröhren visuell erfolgen. Beim vorhergehenden Zuschneiden der Glastafeln wird vorteilhafterweise mit wasserlöslichen oder mit rückstandsfrei abtrocknenden Schneidölen gearbeitet.

Die gereinigte erste Glastafel wird waagerecht positioniert. Auf die oben liegende Innenseite der Glastafel wird der Klebstoff aufgebracht, was bevorzugt automatisch durchgeführt wird. Die Glastafel wird unter der Klebstoffauftragvorrichtung hindurchgeführt oder die Klebstoffauftragvorrichtung wird bevorzugt über die Glastafel hinweggeführt. Dabei erfolgt der genau dosierte Klebstoffauftrag. Generell ist beim Klebstoffauftrag ein exakter, für den jeweiligen Aufbau vorher durch Versuche zu ermittelnder Randabstand einzuhalten, damit kein Klebstoff an den Scheibenrändern ablaufen kann.

Der Klebstoff ist hinsichtlich seiner Viskositäts- und Fließeigenschaften speziell auf das Verfahren abgestimmt. Er ist höherviskos und vorzugsweise thixotrop eingestellt. Der Viskositätsbereich beträgt bei 23 °C 5 bis 300 Pa*s, wobei mit abnehmender Viskosität die Thixotropie höher eingestellt werden muß. Der Klebstoff besitzt bei 23 °C eine Fließgrenze im Bereich von 5 bis 800 Pa, vorzugsweise in einem Bereich von 20 bis 80 Pa.

Die chemische Basis des Klebstoffes kann Silikon, Epoxydharz, Polyurethan, Polyester oder Poly(meth)acrylat sein.

Eine bevorzugte Form des Klebstoffes basiert auf Poly(meth)acrylaten. Der nicht ausgehärtete Klebstoff enthält hauptsächlich reaktive Acrylat- und Methacrylatmonomere, die bei der Aushärtung ein Copolymer bilden, welches wiederum eine vernetzte Struktur aufweisen kann. Der bevorzugte Klebstoff enthält weiterhin acrylatund methacrylatfunktionelle Oligomere (wie z.B. Urethanacrylate, Polyesteracrylate), Füllstoffe, Haftvermittler und Initiatoren. Er kann weiterhin nichtreaktive Acrylat- und Methacrylat-Homo- und Copolymere, Weichmacher, klebrigmachende Zusätze und Stabilisatoren enthalten.

Als reaktive Acrylat- und Methacrylatmonomere werden monofunktionelle und multifunktionelle, bevorzugt monofunktionelle, Ester der Acryl- bzw. Methacrylsäure eingesetzt. Die verwendeten Alkoholkomponenten der Ester können eine mit funktionellen Gruppen substituierte oder unsubstituierte Alkylgruppe, wie Methyl, Ethyl, Propyl, iso-Propyl, n-Butyl, tert-Butyl, Pentyl, Hexyl, deren Isomere und höhere Homologe, wie 2-Ethylhexyl, Phenoxyethyl, Hydroxyethyl, 2-Hydroxypropyl, Caprolactonhydroxyethyl, Polyethylenglycole mit einem Polymerisationsgrad von 5 bis 20, Polypropylenglycole mit einem Polymerisationsgrad von 5 bis 20 und Dimethylaminoethyl, umfassen. Als reaktive Monomere können auch die Acryl- und Methacrylsäure selbst, die Amide dieser Säuren und Acrylnitril eingesetzt werden. Es können auch Mischungen der reaktiven Acrylat- und Methacrylatmonomeren verwendet werden.

Beispiele für acrylat- und methacrylatfunktionelle Oligomere sind Epoxyacrylate, Urethanacrylate, Polyesteracrylate und Siliconacrylate. Die Oligomere können mono- oder höherfunktionell sein, vorzugsweise werden sie difunktionell eingesetzt. Es können auch Mischungen der Oligomere verwendet werden.

Epoxyacrylate basieren auf jeweils mit Acryl- oder Methacrylsäure terminiertem Bisphenol-A-diglycidylether, Bisphenol-F-diglycidylether, deren Oligomeren oder Novolakglycidylether.

Urethanacrylate sind aufgebaut aus Isocyanaten (z.B. Toluylen-, Tetramethylxylen-, Hexamethylen-, Isophoron-, Cyclohexylmethan-, Trimethylhexamethyl-, Xylen- oder Diphenylmethan-diisocyanate) und Polyolen und funktionalisiert mit Hydroxyacrylaten (z.B. Hydroxyethylacrylat) oder Hydroxymethacrylaten (z.B. Hydroxyethylmethaccylat).

Die Polyole können sein Polyesterpolyole oder Polyetherpolyole. Polyesterpolyole können hergestellt werden aus einer Dicarbonsäure (z.B. Adipinsäure, Phthalsäure oder deren Anhydride) und einem Diol (z.B. 1,6-Hexandiol, 1,2-Propandiol, Neopentylglycol, 1,2,3-Propantriol, Trimethylolpropan, Pentaerythrit oder Ethylenglycole, wie Diethylenglycol). Polyesterpolyole können auch durch Reaktion einer Hydroxycarbonsäure (z.B. ausgehend von Caprolacton) mit sich selbst gewonnen werden. Polyetherpolyole können aus Ethylenoxid oder Propylenoxid hergestellt werden.

Polyesteracrylate sind oben beschriebene Polyesterpolyole, die mit Acrylsäure oder mit Methacrylsäure funktionalisiert sind.

Die hier verwendeten an sich bekannten Silicon-acrylate basieren auf mit Acrylat funktionalisierten Polydimethylsiloxanen unterschiedlichen Molekulargewichts.

Nichtreaktive Acrylat- und Methacrylat-Homo- und Copolymere sind Homo- und Copolymere der Acrylsäure, der Methacrylsäure und der oben beschriebenen Ester dieser Säuren. Der bevorzugte Klebstoff kann auch Mischungen der genannten Homo- und Copolymere enthalten.

Füllstoffe können verstärkend und nichtverstärkend sein. Als Füllstoffe können pyrogene oder gefällte Kieselsäuren, die oberflächenbehandelt oder vorzugsweise hydrophil sind, und Cellulosederivate, wie Cellulose-acetate, -acetobutyrate, - acetopropionate, Methylcellulose und Hydroxypropylmethylcellulose, eingesetzt werden. Der bevorzugte Klebstoff kann auch Mischungen der genannten Füllstoffe enthalten.

Bespiele für Weichmacher sind Ester der Phthalsäure, wie Di-2-ethylhexyl-, Diisodecyl-, Diisobutyl-, Dicyclohexyl-, und Dimethyl-phthalat, Ester der Phosphorsäure, wie 2-Ethylhexyl-diphenyl-, Tri(2-ethylhexyl)- und Tricresylphosphat, Ester der Trimellitsäure, wie Tri(2-ethylhexyl)-und Triisononyl-trimellitat, Ester der Citronensäure, wie Acetyltributyl- und Acetyltriethyl-citrat, und Ester der Dicarbonsäuren, wie Di-2-ethylhexyladipat und Dibutylsebacat. Der bevorzugte Klebstoff kann auch Mischungen der genannten Weichmacher enthalten.

Haftvermittler können ausgewählt werden aus der Gruppe der organofunktionellen Silane, wie 3-Glycidyloxypropyltrialkoxysilan, 3-Aminopropyl-trialkoxysilan, N-Aminoethyl-3-aminopropyl-trialkoxysilan, 3-Methacryloxypropyltrialkoxysilan, Vinyl-trialkoxysilan, iso-Butyltrialkoxysilan, Mercaptopropyl-trialkoxysilan, und aus der Gruppe der Kieselsäureester, wie Tetraalkylorthosilikat. Der bevorzugte Klebstoff kann auch Mischungen der genannten Haftvermittler enthalten.

Bei den Initiatoren wird unterschieden zwischen Initiatoren für thermisch aushärtende einkomponentige Klebstoffsysteme, für durch UV-Bestrahlung aushärtende einkomponentige Klebstoffsysteme und für radikalisch aushärtende mehrkomponentige, meist zweikomponentige, Klebstoffsysteme.

In thermisch aushärtenden, einkomponentigen Klebstoffen können organische Peroxide, wie die Gruppe der Ketonperoxide (z.B. Acetylacetonperoxid, tert.-Butylperoxybenzoat) eingesetzt werden. In durch UV-Bestrahlung aushärtenden, einkomponentigen Klebstoffen können Photoinitiatoren jeweils aus der Gruppe der Benzoinether, der Benzilketale, der α-Dialkoxyacetophenone, der α-Hydroxyalkylphenone, der α-Aminoalkylphenone, der Acylphosphinoxide, der Benzophenone oder der Thioxanthone oder Mischungen davon eingesetzt werden. In radikalisch aushärtenden, mehrkomponentigen Klebstoffen können organische Peroxide aus der Gruppe der Perester, wie tert.-Butylperoxybenzoat, in Verbindung mit einem metallorganischen Beschleuniger, wie Kobaltoktoat (Salz der 2-Ethylhexansäure) eingesetzt werden.

Klebrigmachende Zusätze können ausgewählt werden aus der Gruppe der natürlichen und synthetischen, auch nachträglich modifizierten, Harze. Als Harze dienen Kohlenwasserstoffharze, Kolophonium und dessen Derivate, Polyterpene und deren Derivate, Cumaron-Indenharze, Phenolharze, Polybutene, hydrierte Polybutene, Polyisobutene und hydrierte Polyisobutene. Der bevorzugte Klebstoff kann auch Mischungen der genannten klebrigmachenden Zusätze enthalten.

Stabilisatoren können Antioxidantien, wie Phenole (z.B. 4-Methoxyphenol) oder sterisch gehinderte Phenole (z.B. 2,6-Di-tert.-butyl-4-methylphenol) oder Mischungen verschiedener Antioxidantien sein.

Ein bevorzugter Klebstoff weist folgende Zusammensetzung auf (Angaben in Gewichts-%):

| | | |
|---|---|---|
| a) | reaktive Acrylat- oder Methacrylatmonomere | 50 - 90 |
| b) | acrylat- oder methacrylatfunktionelle Oligomere | 5 - 40 |
| c) | nichtreaktive Acrylat- oder Methacrylat-Homo- und -Copolymere | 0 - 15 |
| d) | Füllstoffe | 2 - 30 |
| e) | Weichmacher | 0 - 15 |
| f) | Haftvermittler | 0,3 - 3 |
| g) | Initiatoren | 0,1 - 3 |
| h) | klebrigmachende Zusätze | 0 - 5 |
| i) | Stabilisatoren | 0 - 2 |

Besonders bevorzugt ist ein Klebstoff, der einen oder mehrere Photoinitiatoren enthält und der durch UV-Licht ausgehärtet wird.

Bei Verwendung eines mehrkomponentigen Klebstoffes muß dieser vor der Applikation mit einer Misch- und Dosieranlage gemischt werden.

Von besonderem Vorteil ist, daß der Klebstoffauftrag randabdichtungsfrei erfolgen kann.

Der Klebstoffauftrag kann aus einer senkrecht zur Transportrichtung der Glastafel stehenden Breitschlitzdüse in Form eines geschlossenen Films erfolgen.

Alternativ kann der Klebstoffauftrag mit einer entsprechenden Düsenanordnung in Form von raupenförmigen Klebstoffsträngen, die parallel zur Transportrichtung der Glastafel verlaufen, erfolgen.

Auf die Klebstoffschicht wird die zweite Glastafel deckungsgleich abgelegt, so daß sich eine Sandwichanordnung, bestehend aus Glas-Klebstoff-Glas, bildet. Vorzugsweise wird auch dieser Verfahrensschritt automatisch durchgeführt.

Diese Sandwichanordnung wird anschließend verpreßt. Dazu wird ein mäßiger Druck auf die äußere Oberfläche der zweiten, oben liegenden Glastafel ausgeübt, wobei der Druck entlang einer Linie angewendet wird, die mit der äußeren Oberfläche der zweiten Glastafel zusammenfällt und sich im allgemeinen transversal von einer Seite der zweiten Glasplatte zu der anderen Seite derselben erstreckt. Diese Drucklinie wird von einem Ende der Sandwichanordnung zum anderen bewegt. Der entsprechende Gegendruck auf die untere Glastafel wird z.B. durch die Unterlage ausgeübt. Der auszuübende Druck beträgt 0,5 bis 16 bar. Bevorzugt wird der Druck mit einer oder mehreren Druckwalzen auf die obere zweite Glasplatte ausgeübt. Besonders bevorzugt wird der Druck auf beide Glastafeln durch eine oder mehrere Druckwalzenpaare ausgeübt, wobei die Sandwichanordnung durch den einstellbaren Zwischenraum eines Druckwalzenpaares bewegt wird.

Eventuell noch vorhandene Luft entweicht beim Verpressen vor der vorrückenden Drucklinie. Bei einem raupenförmigen Klebstoffauftrag entweicht die Luft durch die zwischen den Klebstoffraupen vorhandenen Kanäle. Es entsteht ein luftblasenfreier Verbund von erster Glastafel, Klebstoff und zweiter Glastafel. Insbesondere der raupenförmige Klebstoffauftrag wirkt sich positiv auf das Entweichen der Luft aus.

Schließlich wird der Klebstoff ausgehärtet. Dies geschieht in an sich bekannter Weise, nämlich, je nach gewähltem Klebstoff, durch Wärmestrahlung oder durch Radikalbildner oder vorzugsweise durch Bestrahlen mit UV-Licht. Nach der Aushärtung weist die Klebstoffschicht eine Schichtdicke von 0,2 bis 5 mm, bevorzugt 0,5 bis 2 mm auf.

In einer bevorzugten Ausführungsform des Verfahrens wird die gesamte Anordnung aus zwei Glastafeln und Klebstoff zwischen den und während der genannten Verfahrensstufen automatisch gefördert.

In der Zeichnung ist beispielhaft der Verfahrensablauf einer automatisierten Verfahrensvariante angegeben. Mit dem Kipptisch (1) werden die Glastafeln in die Waagerechte abgelegt und mit dem Rollenförderer (2) zur Waschmaschine (3) gefördert. Nach dem Wasch- und Trocknungsvorgang wird eine Glastafel von der Anhebe-, Transport- und Ablegevorrichtung (4) angehoben und in Warteposition gehalten. Die andere, untere Glastafel wird unter der Klebstoffauftragvorrichtung (6), wo der Klebstoffauftrag erfolgt, hindurchgefördert oder die Klebstoffauftragvorrichtung (6) wird über die untere Glastafel hinweggeführt. Danach wird die untere Glastafel zur Transport- und Zusammenlegevorrichtung (7) transportiert. Hier erfolgt das Ablegen der in Warteposition gehaltenen Glastafel auf die mit dem Klebstoff versehene Glastafel. Die Sandwichanordnung gelangt anschließend durch die Walzenpresse (8) zur UV-Bestrahlungseinheit (9), wo die Aushärtung des Klebstoffes erfolgt. Das fertige Verbundglas wird schließlich vom Abnahmekipptisch (10) in die Vertikale gedreht.

Das erfindungsgemäße Verfahren ist auch dazu geeignet, Verbundglas mit mehr als zwei Glastafeln herzustellen. Dazu werden die entsprechenden Verfahrensschritte wiederholt.

Der Gegenstand der Erfindung wird anhand der folgenden Beispiele näher erläutert. Die Prozentangaben sind, soweit nicht anders vermerkt, Gewichtsprozent.

### Beispiel 1: Herstellung eines Klebstoffes

In einem Planetendissolver wurden als reaktive Acrylatmonomere 225,0 g (5 %) Acrylsäure und 2029,5 g (45,1 %) 2-Ethylhexylacrylat, als acrylatfunktionelles Oligomer 1800,0 g (40 %) eines aliphatischen Urethanacrylates (Craynor CN 966 der Firma Cray Valley), als Haftvermittler 22,5 g (0,5 %) Methacryloxypropyltrimethoxysilan (Dynasilan MEMO der Firma Sivento) und als Photoinitiator 18,0 g (0,4 %) 2-Hydroxy-2-methyl-1-phenyl-propan-1-on (Darocure 1173 der Firma Ciba Spezialitätenchemie) während 10 min vollständig gemischt. Anschließend wurden während 30 min 405,0 g (9 %) hochdisperse Kieselsäure (Aerosil 200 der Firma Degussa) als Füllstoff dazugemischt und danach 15 min ein Vakuum von 80 mbar angelegt. Erhalten wurde ein Klebstoff mit einer Viskosität von 12 Pa*s (23°C) und einer Fließgrenze von 31 Pa (23°C).

### Beispiel 2: Herstellung eines Verbundglases mittels einer Druckwalze

Auf eine gereinigte, waagerecht liegende Glastafel mit den Abmessungen 500 x 150 x 3,85 mm wurden 66 g des nach Beispiel 1 hergestellten Klebstoffes aufgegeben. Mit Hilfe eines Zahnspachtels wurde der Klebstoff verteilt, und es wurden in Längsrichtung der Glastafel Kanäle in den Klebstoff gezogen, so daß der Klebstoff raupenförmig auf der Glastafel auflag. Darauf wurde eine zweite Glastafel mit identischen Abmessungen deckungsgleich aufgelegt, so daß sich jeweils neben den raupenförmigen Klebstoffsträngen Luftkanäle befanden. Diese Sandwichanordnung wurde mit einer Handwalze (Durchmesser 100 mm ) verpreßt. Dazu wurde die Handwalze unter einem mäßigen, mit Hand ausgeübten Druck in Längsrichtung von einer Seite der Sandwichanordnung zur anderen bewegt, wobei die noch zwischen den beiden Glastafeln befindliche Luft durch die Kanäle vor der Drucklinie her entwich, sich die Kanäle verschlossen und ein luftblasenfreier Verbund aus den zwei Glastafeln mit der dazwischen befindlichen Klebstoffschicht entstand. Der Klebstoff wurde anschließend während 7 min unter einem UV-Himmel der Firma Torgauer Maschinenbau ausgehärtet. Anschließend wurde die Dicke des erhaltenen, luftblasenfreien Verbundglases mit einer Mikrometerschraube gemessen. Sie betrug 8,51 mm, was einer Klebstoffschichtdicke von 0,81 mm entspricht.

### Beispiel 3: Herstellung eines Verbundglases mittels eines Druckwalzenpaares

Analog Beispiel 2 wurde mit 80 g Klebstoff eine Sandwichanordnung aus zwei Glastafeln und dazwischen befindlichen Klebstoffraupen hergestellt. Die Sandwichanordnung wurde durch den 9 mm großen Spalt eines gummierten Walzenpaares (Durchmesser der Walzen 35 mm) geführt und dabei luftblasenfrei verpreßt. Die Aushärtung wurde wie in Beispiel 2 durchgeführt. Die Dicke des erhaltenen, luftblasenfreien Verbundglases betrug 8,80 mm, was einer Klebstoffschichtdicke von 1,10 mm entspricht.

### Beispiel 4: Herstellung eines Verbundglases mittels zweier hintereinander angeordneter Druckwalzen

Auf eine gereinigte, waagerecht liegende Glastafel mit den Abmessungen 1500 x 1000 x 3,85 mm wurden 2700 g des in Beispiel 1 hergestellten Klebstoffes gegeben. Mit Hilfe eines Zahnspachtels wurde der Klebstoff verteilt, und es wurden in Längsrichtung der Glastafel Kanäle in den Klebstoff gezogen, so daß der Klebstoff raupenförmig auf der Glastafel auflag. Darauf wurde eine zweite Glastafel mit identischen Abmessungen deckungsgleich aufgelegt. Diese Sandwichanordnung wurde mit zwei im Abstand von 200 mm hintereinander angeordneten gummierten Druckwalzen (Durchmesser 50 mm), die analog Beispiel 2 von Hand geführt und aufgedrückt wurden, luftblasenfrei verpreßt. Die Aushärtung wurde wie in Beispiel 2 durchgeführt. Die Dicke des erhaltenen, luftblasenfreien Verbundglases betrug 9,52 mm, was einer Klebstoffschichtdicke von 1,82 mm entspricht.

### Bezugszeichenliste zur Zeichnung

1. Kipptisch zum Ablegen der Glastafeln in die Waagerechte
2. Rollenförderer
3. Waschmaschine
4. Anhebe-, Transport- und Ablegevorrichtung für die aufzulegende Glastafel
5. Rollenförderer
6. Klebstoffauftragvorrichtung
7. Transport- und Zusammenlegevorrichtung
8. Walzenpresse
9. UV-Bestrahlungseinheit
10. Abnahmekipptisch

## Patentansprüche

1. Verfahren zur Herstellung von Verbundglas, welches aus mindestens 2 Glastafeln und einer Zwischenschicht aus Klebstoff besteht, wobei
a) der Klebstoff mit einer Viskosität zwischen 5 und 300 Pa*s (23 °C) und einer Fließgrenze zwischen 5 und 800 Pa (23 °C) in pastöser Form auf die Innenseite der ersten, waagerecht liegenden Glastafel aufgebracht wird,
b) auf diese Klebstoffschicht eine zweite Glastafel deckungsgleich unter Bildung einer Sandwichanordnung abgelegt wird,
c) diese Sandwichanordnung durch Einwirkung eines mäßigen Drucks von 0,5 bis 16 bar auf die äußere Oberfläche der zweiten Glastafel und eines entsprechenden Gegendrucks auf die erste Glastafel zusammengepreßt wird,
wobei der Druck entlang einer Linie angewendet wird, die mit der äußeren Oberfläche der zweites Glastafel zusammenfällt und die sich transversal von einer Seite zur anderen Seite der zweiten Glastafel erstreckt,
und wobei die Drucklinie von einem Ende der Anordnung zum anderen bewegt wird, und
d) anschließend der Klebstoff aushärtet.

2. Verfahren nach Anspruch 1, **dadurch gekennzeichnet, daß** der Klebstoff eine Fließgrenze von 20 bis 80 Pa (23 °C) aufweist.

3. Verfahren nach einem der Ansprüche 1 bis 2, **dadurch gekennzeichnet, daß** der Klebstoff auf Silikon, Epoxydharz, Polyurethan, Polyester oder Poly(meth)acrylat basiert.

4. Verfahren nach einem der Ansprüche 1 bis 2, **dadurch gekennzeichnet, daß** ein Klebstoff, welcher aus folgenden Inhaltsstoffen besteht, verwendet wird (Angaben in Gewichtsprozent, Summe der eingesetzten Inhaltsstoffe = 100 %) :
| | | |
|---|---|---|
| a) | reaktive Acrylat- oder Methacrylatmonomere | 50 - 90 |
| b) | acrylat- oder methacrylatfunktionelle Oligomere | 5 - 40 |
| c) | nichtreaktive Acrylat- oder Methacrylat-Homo- und -Copolymere | 0 - 15 |
| d) | Füllstoffe | 2 - 30 |
| e) | Weichmacher | 0 - 15 |
| f) | Haftvermittler | 0,3 - 3 |
| g) | Initiatoren | 0,1 - 3 |
| h) | klebrigmachende Zusätze | 0 - 5 |
| i) | Stabilisatoren | 0 - 2 |

5. Verfahren nach einem oder mehreren der Ansprüche 1 bis 4, **dadurch gekennzeichnet, daß** der Klebstoff Photoinitiatoren enthält und durch UV-Licht ausgehärtet wird.

6. Verfahren nach einem oder mehreren der Ansprüche 1 bis 5, **dadurch gekennzeichnet, daß** die Verbundglasherstellung randabdichtungsfrei durchgeführt wird.

7. Verfahren nach einem oder mehreren der Ansprüche 1 bis 6, **dadurch gekennzeichnet, daß** der Klebstoffauftrag in Form eines geschlossenen Films erfolgt.

8. Verfahren nach einem oder mehreren der Ansprüche 1 bis 6, **dadurch gekennzeichnet, daß** der Klebstoffauftrag in Form von in Transportrichtung der Glastafel parallel verlaufenden, raupenförmigen Klebstoffsträngen erfolgt.

9. Verfahren nach einem oder mehreren der Ansprüche 1 bis 8, **dadurch gekennzeichnet, daß** der Druck durch eine oder mehrere Druckwalzen ausgeübt wird.

10. Verfahren nach Anspruch 9, **dadurch gekennzeichnet, daß** die Sandwichanordnung zwischen einem oder mehreren Druckwalzenpaaren senkrecht zur Achse der Walzen bewegt wird.

11. Verfahren nach einem oder mehreren der Ansprüche 1 bis 10, **dadurch gekennzeichnet, daß** die Glastafeln und die Sandwichanordnung zwischen den und während der Verfahrensstufen automatisch bewegt werden.

## Claims

1. Method for the production of laminated glass which consists of at least 2 glass plates and an intermediate layer of adhesive, wherein
a) the adhesive, having a viscosity of between 5 and 300 Pa*s (23°C) and a flow limit of between 5 and 800 Pa (23°C), is applied in soft form to the inside of the first glass plate, which lies horizontally,
b) a second glass plate is laid on this adhesive layer so as to be congruent therewith, forming a sandwich arrangement,
c) this sandwich arrangement is pressed together by the action of a moderate pressure of 0.5 to 16 bar on the outer surface of the second glass plate and a corresponding counterpressure on the first glass plate, the pressure being applied along a line which coincides with the outer surface of the second glass plate and extends transversely from one side to the other side of the second glass plate, and the line of pressure being moved from one end of the arrangement to the other, and
d) the adhesive is subsequently cured.

2. Method according to claim 1, **characterised in that** the adhesive has a flow limit of 20 to 80 Pa (23°C).

3. Method according to one of claims 1 to 2, **characterised in that** the adhesive is based on silicone, epoxy resin, polyurethane, polyester or poly(meth)acrylate.

4. Method according to one of claims 1 to 2, **characterised in that** an adhesive which consists of the following components is used (data in percent by weight, sum of the components used = 100%):
| | | |
|---|---|---|
| a) | reactive acrylate monomers or methacrylate monomers | 50 - 90 |
| b) | acrylate-functional or methacrylate-functional oligomers | 5 - 40 |
| c) | non-reactive acrylate or methacrylate homopolymers and copolymers | 0 - 15 |
| d) | fillers | 2 - 30 |
| e) | plasticisers | 0 - 15 |
| f) | adhesion promoters | 0.3 - 3 |
| g) | initiators | 0.1 - 3 |
| h) | tackifying additives | 0 - 5 |
| i) | stabilisers | 0 - 2 |

5. Method according to one or more of claims 1 to 4, **characterised in that** the adhesive contains photoinitiators and is cured by UV light.

6. Method according to one or more of claims 1 to 5, **characterised in that** the laminated-glass production is carried out without edge sealing.

7. Method according to one or more of claims 1 to 6, **characterised in that** the application of adhesive takes place in the form of a closed film.

8. Method according to one or more of claims 1 to 6, **characterised in that** the application of adhesive takes place in the form of bead-like strands of adhesive which extend in a parallel manner in the direction of transport of the glass plate.

9. Method according to one or more of claims 1 to 8, **characterised in that** the pressure is exerted by one or more pressing rollers.

10. Method according to claim 9, **characterised in that** the sandwich arrangement is moved between one or more pairs of pressing rollers at right angles to the axis of the rollers.

11. Method according to one or more of claims 1 to 10, **characterised in that** the glass plates and the sandwich arrangement are moved automatically between the method stages and during the same.

## Revendications

1. Procédé de fabrication de verre de sécurité feuilleté, formé d'au moins deux feuilles de verre et d'une couche intermédiaire d'adhésif, dans lequel:
a) l'adhésif qui présente une viscosité comprise entre 5 et 300 Pa*s (à 23 °C) et une limite d'écoulement comprise entre 5 et 300 Pa*s (23 °C) est appliqué sous une forme pâteuse sur la face intérieure de la première feuille de verre reposant à plat,
b) une deuxième feuille de verre est posée avec un recouvrement parfait sur ladite couche d'adhésif pour former un système sandwich
c) cet ensemble sandwich est comprimé par application d'une pression modérée comprise entre 0,5 et 16 bar sur la face extérieure de la deuxième feuille de verre et d'une contre-pression correspondante sur la première feuille de verre,
la pression étant appliquée suivant une ligne qui coïncide avec la surface extérieure de la deuxième feuille de verre et s'étend transversalement d'un côté à l'autre de la deuxième feuille de verre,
la ligne de pression étant déplacée d'une extrémité du système sandwich à l'autre extrémité
d) et l'adhésif est ensuite durci.

2. Procédé selon la revendication 1, **caractérisé en ce que** l'adhésif présente une limite d'écoulement comprise entre 20 et 80 Pa*s (23 °C).

3. Procédé selon une des revendications 1 à 2, **caractérisé en ce que** l'adhésif est à base de silicone, de résine époxy, de polyuréthane, de polyester ou poly(méth)acrylate.

4. Procédé selon une des revendications 1 à 2, **caractérisé en ce qu'**on utilise un adhésif qui comprend les composants suivants (valeurs en pourcents du poids, somme des composants utilisés = 100%):
| | | |
|---|---|---|
| a) | monomères réactifs acrylate ou métahcrylate | 50 - 90 |
| b) | oligomères fonctionnels d'acrylate ou de méthacrylate | 5 - 40 |
| c) | homopolymères- et copolymères non-réactifs d'acrylate ou de méthacrylate | 0 - 15 |
| d) | charges | 2 - 30 |
| e) | plastifiants | 0 - 15 |
| f) | agents d'adhésion | 0,3 - 3 |
| g) | amorceurs | 0,1 - 3 |
| h) | adjuvants d'adhésion | 0 - 5 |
| i) | stabilisants | 0 - 2 |

5. Procédé selon une ou plusieurs des revendications 1 à 4, **caractérisé en ce que** l'adhésif contient des photo-amorceurs et est durci à l'aide de lumière UV.

6. Procédé selon une ou plusieurs des revendications 1 à 5, **caractérisé en ce que** la fabrication du verre de sécurité feuilleté a lieu sans étanchéité au niveau des bords.

7. Procédé selon une ou plusieurs des revendications 1 à 6, **caractérisé en ce que** l'application de l'adhésif a lieu sous forme d'un film fermé.

8. Procédé selon une ou plusieurs des revendications 1 à 6, **caractérisé en ce que** l'application de l'adhésif a lieu sous la forme de cordons d'adhésif parallèles qui s'étendent dans la direction de la feuille de verre.

9. Procédé selon une ou plusieurs des revendications 1 à 8, **caractérisé en ce que** la pression est exercée par un ou plusieurs cylindres presseurs.

10. Procédé selon la revendication 9, **caractérisé en ce que** l'ensemble sandwich est déplacé entre une ou plusieurs paires de cylindres presseurs, perpendiculairement à l'axe des cylindres.

11. Procédé selon une ou plusieurs des revendications 1 à 10, **caractérisé en ce que** les feuilles de verre et l'ensemble sandwich sont déplacés de manière automatique entre et pendant les étapes du procédé.
